# EUROPEAN PATENT APPLICATION

(11) **EP 2 443 972 A1**
(43) Date of publication of application: **25.04.2012**
(21) Application number: 11008341.7
(22) Date of filing: 17.10.2011
(51) Int. Cl.: A47J 31/36

(54) **System for feeding capsules containing a food product for producing a beverage or the like, particularly for vending machines**

(30) Priority: 19.10.2010 IT MI20101912
(71) Applicant: Bianchi Vending Group S.P.A., 24040 Verdellino (BG) (IT)
(72) Inventor: Zonelli, Andrea, 30020 Marcon (Venezia) (IT)
(74) Representative: Forattini, Amelia

(57) **Abstract**

A system for feeding capsules containing a food product for producing a beverage or the like, particularly for vending machines, including a feeding unit associated with a beverage production unit; the feeding unit allows to feed capsules to the beverage production unit, the capsules being contained in an orderly manner in cartridges associated with the feeding unit; each cartridge is constituted by a box-like body which has a substantially prismatic shape and has two mutually opposite parallel walls; the distance between the inner surfaces of the lateral parallel walls is similar to the size of a capsule and the capsules are arranged side by side inside each cartridge.

## Description

The present invention relates to a system for feeding capsules containing a food product for producing a beverage or the like, particularly for vending machines.

As is known, the attention of large industries is increasingly focused on the use of coffee in portions, i.e., packaged in capsules, capable of offering the experience of a high-quality coffee both in a domestic environment and in a public environment, in restaurants, hotels, bars, offices, in catering services, in commercial establishments and in airports and stations.

So far, coffee machine manufacturers generally have provided a different machine for each specific use.

For example, most existing coffee machines for domestic use and for small commercial establishments or communities provide for manual loading of a single capsule at a time; i.e., the capsule must be inserted in the machine to reach the coffee dispensing element.

Domestic appliances have been proposed which load the capsules by means of a semiautomatic revolver-like system.

In those automatic loading systems, the capsules are contained in individual cylinders which are arranged in a circular shape above the dispensing assembly.

To dispense a specific flavor, the user must turn the cylinders until the column of the desired flavor is located above the point of release of the capsule into the infusion assembly.

W02009/133570 discloses an automatic pod conveyor and brewer assembly for fresh hot beverage, of the above described type, comprising a rotating pod conveyor that handles pods stacked in vertical chutes.

EP1334678A2 discloses a dispenser of single-use portions of preparations for beverages, such as coffee, comprising one or more columns each containing a single stack of capsules.

Both W02009/133570 and EP1334678A2 show vertical cartridges arranged at a distance from each other thus occupying a considerable space.

Another type of apparatus, developed for vending machines, uses a system for loading the capsules automatically into the infusion assembly, where the capsules are loaded haphazardly in a single container.

Such apparatus has a system for sorting the individual capsules before release into the infusion assembly.

The above system is substantially identical to common sorting systems used in the industry and has a considerable size, such that it is possible to manage a single coffee flavor in a vending machine.

The aim of the present invention is to provide a system for feeding capsules, particularly for a vending machine, that overcomes the drawbacks of the cited prior art.

Within the scope of this aim, an object of the invention is to provide a feeding system that allows to offer to the public a variety of types of product in capsules, dispensed by a single machine.

Another object of the invention is to provide a feeding system that allows to contain a larger number of capsules for an equal loading volume available for the container.

Another object of the invention is to provide a feeding system in which the capsules inside the container are sorted and arranged in the most suitable manner for facilitating their insertion in the infusion assembly,

Another object is to provide a feeding system in which the movement of the capsules is absolutely reliable and substantially free of jamming risks.

Another object of the present invention is to provide a system that by virtue of its particular constructive characteristics is capable of giving the greatest assurances of reliability and safety in use.

Another object of the present invention is to provide a system that can be manufactured easily by using commonly commercially available components and materials and is also competitive from an economic standpoint.

This aim and these and other objects which will become better apparent hereinafter are achieved by a system for feeding capsules containing a food product for producing a beverage or the like, particularly for vending machines, comprising a feeding unit associated with a beverage production unit; said feeding unit allows to feed capsules to said beverage production unit, said capsules being contained in an orderly manner in one or more cartridges associated with said feeding unit; said feeding system is characterized in that each cartridge is constituted by a box-like body which has a substantially prismatic shape and has at least two mutually opposite parallel walls; the distance between the inner surfaces of said lateral parallel walls is similar to the size of a capsule; said capsules are arranged side by side inside each cartridge.

Further characteristics and advantages will become better apparent from the description of preferred but not exclusive embodiments of the invention, illustrated by way of non-limiting example in the accompanying drawings, wherein:
Figure 1 is a perspective view of the feeding unit provided with a series of cartridges, according to the system of the present invention;
Figure 2 is a bottom perspective view of the opposite side of the unit;
Figure 3 is a partially sectional perspective view of the front side of the unit;
Figure 4 is a partially sectional perspective view of the left side of the unit;
Figure 5 is a partially cutout perspective view of the right side of the unit without the cartridges;
Figure 6 is a perspective, partially see-through, view of a cartridge.

With reference to the cited figures, the system for feeding capsules containing a food product for producing a beverage or the like, particularly for vending machines, comprises a feeding unit, generally designated by the reference numeral 1, which can be associated with a beverage production unit, not visible in the figures, of a beverage preparing machine, also not shown.

The beverage preparing unit may be an infusion assembly, for preparing infusion beverages such as coffee, tea, etcetera, or a unit for mixing or for other systems for preparing beverages starting from a powder, paste or fluid contained in capsules.

The feeding unit 1 allows to feed the infusion assembly with capsules 2 which are contained in an orderly fashion in one or more cartridges 3, 33.

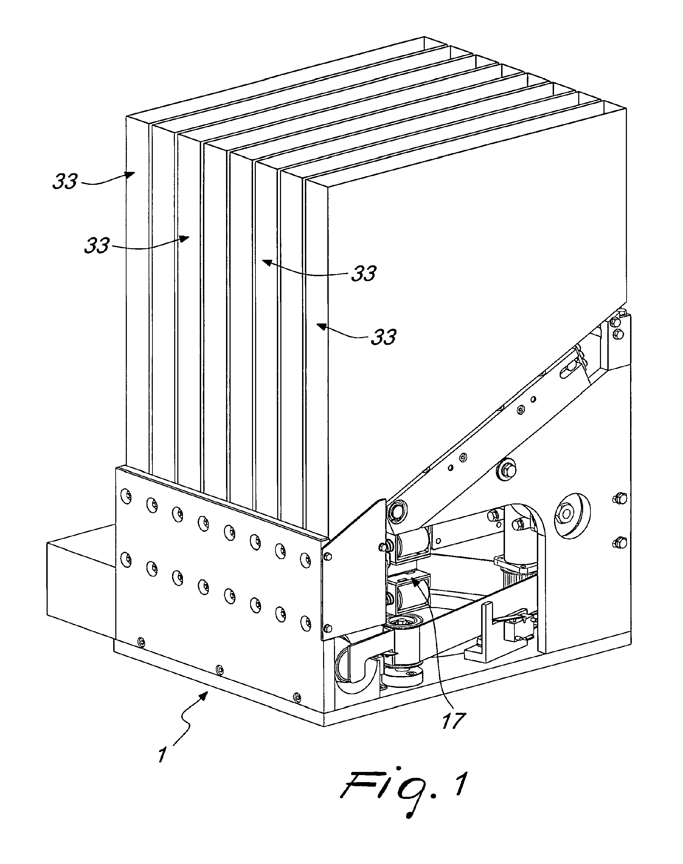

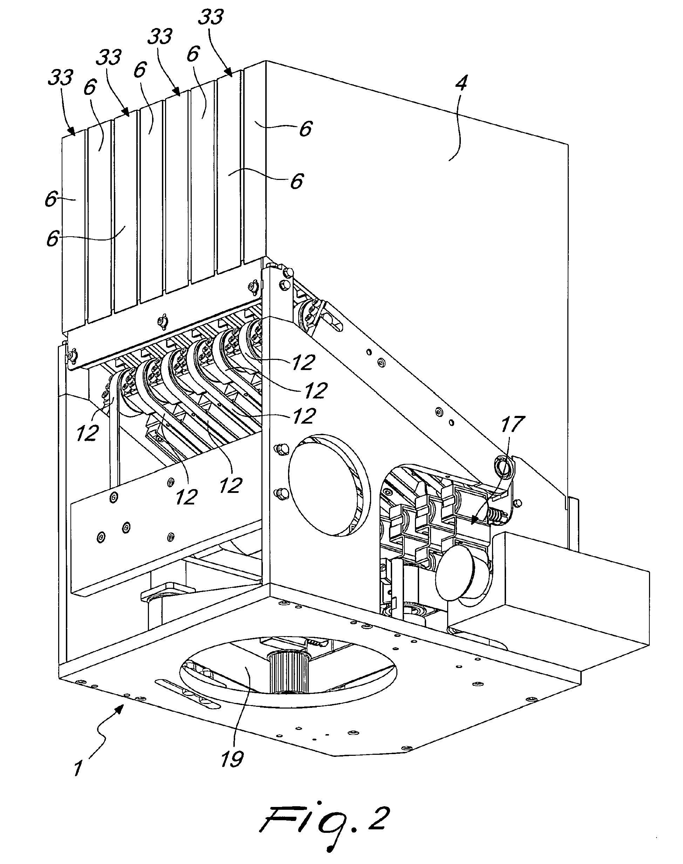

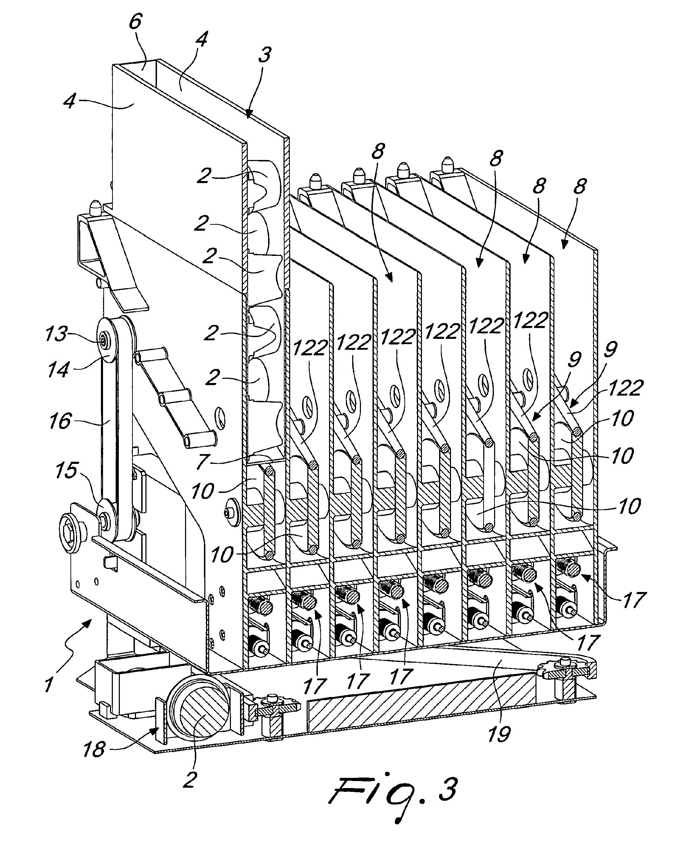

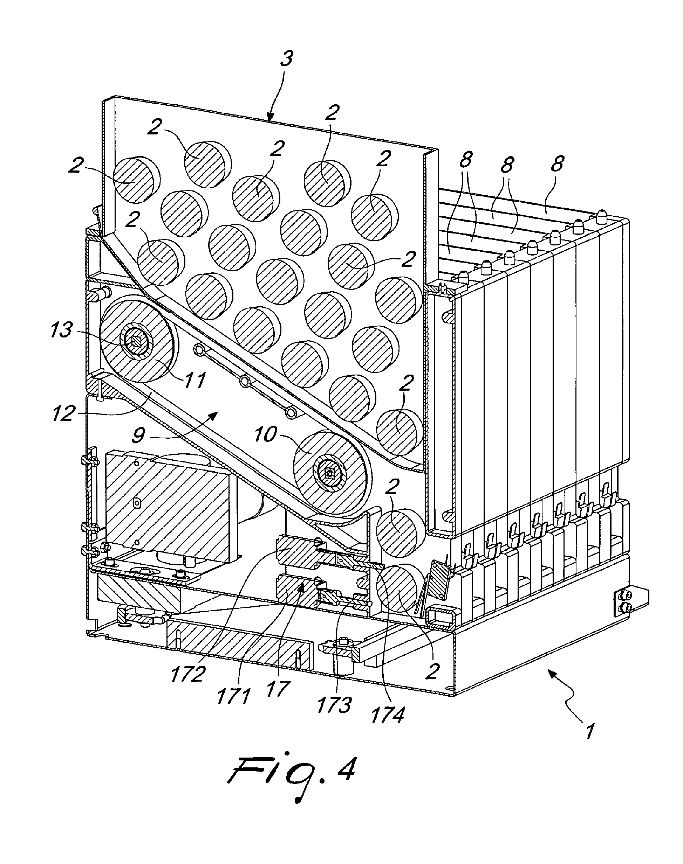

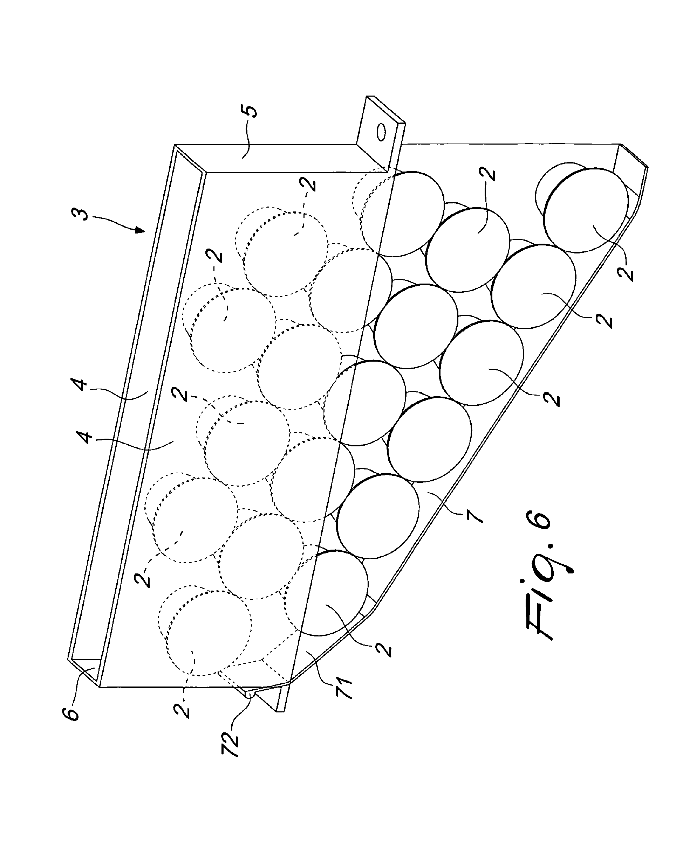

The cartridges may be integral with the feeding unit 1, as seen in Figures 1 and 2, wherein the cartridges are designated by the reference numerals 33, or removable elements, as seen in Figures 3-6, wherein the cartridges are designated by the reference numeral 3.

Each removable cartridge 3 is constituted by a prismatic box-like body, which includes at least two side walls 4 which are closed by a front wall 5 and by a rear wall 6.

At least the side walls 4 of the cartridge 3, 33 are parallel to each other and the distance between the internal surfaces of the side walls is similar to the size of a capsule.

The cartridge is made in such a manner that it is possible to change easily its dimensions and therefore its capacity.

In fact, the capacity can be increased by increasing the height of the side walls 4, thus increasing the number of capsules contained in the cartridge, without varying the feeding unit.

In a lower region, the cartridge is closed by an inclined wall 7, which is connected to the front and rear walls, so as to give the cartridge a trapezoidal shape which, in the conditions for use, is upside down.

The inclined wall 7 is connected to the rear wall 6 by means of a connecting portion 71.

Preferably, the inclined wall 7 is constituted by a film which can be removed, after the cartridge 3 has been inserted in the feeding unit, to open the lower part of the cartridge so as to make the capsules available to the pick-up device, as will be described hereinafter.

The film 7 may be extracted by pulling an external tab 72.

The capsules 2, which are generally frustum-shaped, are arranged preferably in the cartridge 3 mutually side by side, so that their end faces are in contact with the side walls 4 of the cartridge.

The distance between the internal surfaces of the side walls 4 of the cartridge is substantially equal to the distance between the end faces of the capsule, so that the capsules inside the cartridge can still move by sliding their end faces against the internal surfaces of the walls.

The feeding unit 1 has a plurality of seats 8, each of which is adapted to accommodate a cartridge 3.

Each seat 8 has a capsule pick-up device, generally designated by the reference numeral 9.

The capsule pick-up device 9 is constituted by a belt conveyor having a pair of motor driven pulleys, a front pulley 10 and a rear pulley 11, which guide a belt 12 or another elongated element that has a transport function.

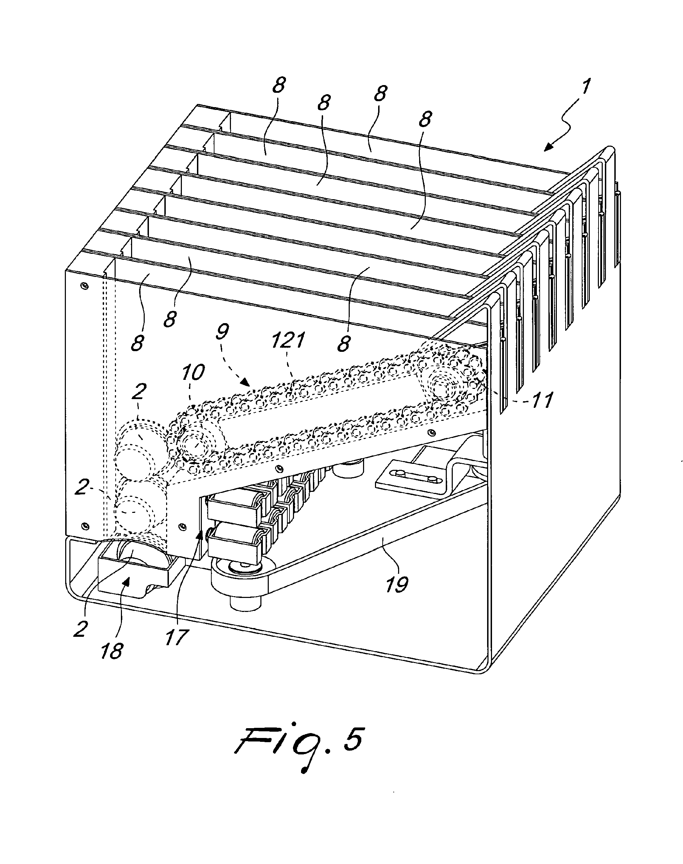

For example, Figure 5 illustrates a pick-up device which includes a chain, designated by the reference numeral 121, while Figure 3 illustrates an embodiment wherein the elongated element is constituted by an element that has a circular cross-section and is designated by the reference numeral 122.

The pulley may be motorized by keying all the rear pulleys 11 on a single transmission shaft 13. The shaft has a transmission pulley 14, arranged outside the seats 8, and receiving the motion from a driving pulley 15 by means of a belt 16 or a similar transmission means.

Whatever the embodiment of the elongated element of the pick-up device, the rotation of the pulleys 10 and 11 makes the elongated element slide in a backward direction, drawing the capsules upward so as to shake them, preventing them from becoming jammed between the walls of the cartridge and together.

Each seat 8 is provided with a selector device, designated by the reference numeral 17, which retains the capsule arranged in the lowest position until it is selected for dispensing the beverage.

The selector 17 is constituted for example by a pair of solenoids 171 and 172 which control a respective bar 173 and 174.

The bars of the solenoids allow to lock or release the descent of one capsule at a time from the respective cartridge to a collector device.

The upward movement induced by the belt 12, as described above, allows to discharge the weight of the column of capsules that bears on the selector device 17 when a capsule is released.

The collector device is constituted by a carriage 18, which slides along the path that corresponds to the selectors 17 of the seats 8 by means of a motion device which is constituted for example by a belt system 19.

The belt system places the carriage 18 at a selector device of a selected seat, in order to pick up a capsule 2 and move it to a feeding point of the infusion device.

The operation of the feeding unit according to the present invention is as follows.

If the cartridges are integral with the feeding unit, they are loaded with capsules of a different type.

Each cartridge may contain a different product.

If the cartridges are of the removable type, as shown in Figures 3-6, each cartridge is inserted in a seat 8 and, once it has been positioned, the film 7 is extracted by pulling the external tab 72.

The capsules 2 in the lowest position are thus in contact with the elongated element, i.e., the conveyor belt 12, of the pick-up device 9.

The pick-up device, which can start to operate when a beverage is selected, as will be described hereinafter, allows correct placement of the capsules 2, as described above, so that the capsule that lies in the most forward and lower position is retained by the selector device 17.

When the user selects a beverage, the corresponding selector device 17 is activated and allows one capsule 2, and only that one, to fall into the carriage 18 previously arranged at the activated selector.

At this point the carriage 18 deposits the capsule 2 in the feeding point of the infusion device.

The present feeding system, applied to a vending machine, allows to offer to the user a variety of types of product in capsules within the same machine.

The machine in fact can be resupplied with several cartridges, each of which can contain a different product, such as for example different types of coffee and other products such as tea, chocolate, etcetera.

According to the requirements, the machine can be resupplied with more than one cartridge containing capsules of the product that is most in demand, for example regular coffee, while each one of the other cartridges contains a different product.

The modularity of the feeding system according to the present invention allows to resupply easily the vending machine with the quantity and number of products best suited for the specific consumption requirements.

The prismatic shape of the containers and the arrangement of the capsules allows to optimize the occupied space, so that for an equal volume available in the vending machine the present feeding system allows to supply the vending machine with a larger number of capsules with respect to traditional feeding systems.

Also, the present system with modular cartridges allows to replace depleted cartridges with an operation that is far easier and especially quicker than traditional systems.

In practice it has been found that the invention achieves the intended aim and objects, providing a system for feeding capsules for machines for preparing beverages that is particularly advantageous in vending machines.

## Claims

1. A system for feeding capsules containing a food product for producing a beverage or the like, particularly for vending machines, comprising a feeding unit associated with a beverage production unit; said feeding unit allows to feed capsules to said beverage production unit, said capsules being contained in an orderly manner in one or more cartridges associated with said feeding unit; said feeding system is **characterized in that** each cartridge is constituted by a box-like body which has a substantially prismatic shape and has at least two mutually opposite parallel walls; the distance between the inner surfaces of said lateral parallel walls is similar to the size of a capsule; said capsules are arranged side by side inside each cartridge.

2. The system according to claim 1, **characterized in that** said feeding unit comprises a plurality of adjacent seats, each of which is adapted to accommodate a cartridge.

3. The system according to claim 1 or 2, **characterized in that** each seat of said feeding unit comprises a capsule pick-up device and a selector device, which holds the capsule that is located in the lowest position until the moment when it is selected for dispensing the beverage.

4. The system according to one or more of the preceding claims, **characterized in that** the capsule pick-up system comprises a pair of motor-driven pulleys which guide an elongated element having a transport function; said elongated element is constituted by a band, belt, chain, cable or the like.

5. The system according to one or more of the preceding claims, **characterized in that** said selector device is constituted by a pair of solenoids, which control a respective bar; said solenoid bars allow to stop or free the descent of one capsule at a time from the respective cartridge to a collector device.

6. The system according to one or more of the preceding claims, **characterized in that** said feeding unit comprises a collector device, which picks up a capsule coming from one of said selector devices and feeds it to said beverage production unit.

7. The system according to one or more of the preceding claims, **characterized in that** said collector device is constituted by a carriage that can slide along a path that corresponds to said selector devices of said seats by means of a motion device.

8. The system according to one or more of the preceding claims, **characterized in that** said motion device comprises a belt system.

9. The system according to one or more of the preceding claims, **characterized in that** said cartridge is closed at the bottom by an inclined wall, which is connected to said front and rear walls; said inclined wall is constituted by a film, which can be extracted after the cartridge has been inserted in said seat of the feeding unit, thus opening the lower part of said cartridge and placing said capsules in contact with said pick-up device.

10. The system according to one or more of the preceding claims, **characterized in that** said capsules are substantially cylindrical or frustum-shaped and comprise two end faces: said end faces of said capsules inside said cartridge are in contact with said side walls; the distance between the internal surfaces of said side walls of the cartridge is substantially equal to the distance between the end faces of said capsules.
